# EUROPEAN PATENT SPECIFICATION

(11) **EP 2 845 826 B1**
(45) Date of publication and mention of the grant of the patent: **13.03.2019**
(21) Application number: 14178179.9
(22) Date of filing: 23.07.2014
(51) Int. Cl.: B65H 16/00, B65H 18/08, B65H 75/02, B62B 3/00, B65H 75/00

(54) **Belt-transportation-trolley**
Bandtransporttrolley
Chariot de transport à courroie

(30) Priority: 30.07.2013 EP 13178495
(43) Date of publication of application: 11.03.2015
(73) Proprietor: GEA Food Solutions Bakel B.V., 5761 EN Bakel (NL)
(72) Inventor: Boogers, George, Lambertus, Josephus, Maria, 5406 AR, Uden (NL); Van Der Laak, Jacobus, Johannes, Maria, 5763 PM, Milheeze (NL); Boeijen, Nick, William, 5492 BE, Sint-Oedenrode (NL)
(74) Representative: Wolff, Felix

(56) References cited:
- EP-A1- 0 066 907
- DE-A1- 3 837 149
- FR-A1- 2 663 309
- US-A- 4 754 885
- US-A- 5 706 932

## Description

The present invention relates to a belt-transportation-trolley and a system comprising a food processing unit and the belt-transportation-trolley. The present invention further relates to a method to remove and reassemble a conveyor belt, particularly from a food processing unit.

Food processing units, as disclosed in FR 2 663 309 or EP 0 066 907 for example, marination-devices, formers need to be cleaned in short intervals. In many cases, these units comprise a conveyor belt to transport the food to be treated and/or which has been treated. For the cleaning purposes of the unit itself, but also of the belt, the belt has to be removed.

It was therefore the objective of the present invention to provide a belt-transportation-trolley and a method with a belt-transportation-trolley.

The problem is solved with a belt-transportation-trolley as defined in claim 1 and a method to remove and reassemble a conveyor belt at a food processing with a belt-transportation-trolley according to claim 7.

The inventive belt-transportation-trolley has the advantage that a single person is able to assemble and/or reassemble a belt from a production unit. Preferably, no other processing units in a line of multiple processing units need to be translocated for the assembly/disassembly of the conveyor belt.

Following a first aspect, the present invention relates to a belt-transportation-trolley. This belt-transportation-trolley is preferably utilized in production fields with high hygienic standards like for example the food- and/or the pharmaceutical industry. A processing unit according to the present invention is a unit in which a material is altered in its shape and/or consistency. Preferably the processing unit is a food processing unit, which for example, cuts, forms, cooks, fries, marinates, massages, cools, freezes, portions of a food product, particularly a protein containing food product.

The conveyor belt is preferably made from a plastic and/or metal-material, wherein the surface, which is in contact with the product, preferably the food product is preferably smooth. On its backside the conveyor belt preferably comprises form- and/or force-fit-means, which cooperate with corresponding form- and/or force-fit means of a drive mechanism.

The belt-transportation-trolley can be accommodated next to a processing unit, for example a food-processing-unit, to take over a conveyor belt which has been removed from the processing unit. The belt-transportation trolley comprises means to store the conveyor belt.

This means is a receptacle, into which the conveyor belt is folded. Preferably, this receptacle is designed and/or arranged such, that no debris and/or liquid can accumulate in the receptacle. More preferably, the receptacle is designed as a bar-construction. Preferably, the receptacle itself is essentially U-shaped, more preferably designed from bars, preferably with a circular cross-section. The front- and the back end of the U are preferably open. Preferably, the receptacle is rotatable around a vertical axis, more preferably by 180°. The receptacle is preferably placed in or below the plane on which the conveyor belt transports food products in a food processing unit.

Alternatively or additionally, the inventive belt-transportation-trolley comprises means to coil up the conveyor belt. This means is for example a hoisting device or an axel around which the conveyor belt is rolled and which turns around a horizontal axis. The means are preferably driven manually, but can be motorized as well. Preferably, the means can be turned in two directions. The axel of the means to coil up the conveyor belt is preferably placed in or above the plane on which the conveyor belt transports food products in a food processing unit.

Preferably, the means to coil up the conveyor belt is placed above the receptacle. More preferably, the distance between means to coil up and the receptacle is sufficient to clean the conveyor belt, preferably on two opposite sides.

The means to coil up the conveyor belt can be utilized to lower and/or lift the conveyor belt out of the receptacle or into the receptacle.

The belt-transportation-trolley preferably comprises means to move it easily, like one or more wheels. This preferred embodiment of the present invention allows to clean the conveyor belt remote from the food processing unit.

Another subject matter of the present invention is a system comprising a food processing unit with a conveyor belt and the inventive belt-transportation-trolley.

The disclosure made regarding this subject matter also applies to the other subject matters and vice versa.

The belt-transportation-trolley is placed next to the processing unit, preferably the food processing unit whenever the belt needs to be removed from the processing unit. The conveyor belt can be stored in/on the means of the belt-transportation-trolley and/or can be transported to a remote location where it is stored and/or cleaned. Furthermore the belt-transportation-trolley can be utilized to transport the conveyor belt back to the processing unit. After the conveyor belt has been placed into the receptacle, the conveyor belt can coiled up by the corresponding means of the trolley and/or the receptacle can be turned around a vertical axis by preferably 180°. Alternatively, the conveyor belt is coiled up and then lowered into the receptacle. During roll-up and/or roll-off, the belt is preferably cleaned, preferably cleaned on two opposite sides.

Preferably, the processing unit comprises an infeed- and an outfeed-side. The trolley can be placed at the infeed or at the outfeed side.

Preferably, the processing unit comprises belt drive means, preferably a motor, that more preferably drives form- and/or force-fit-means, for example a sprocket or the like.
Even more preferably, the processing unit comprises a conveyor belt guide module, which guides the belt and/or assures the contact between the conveyor belt and the drive means. The drive and/or the guide module can be utilized to assemble or disassemble the conveyor belt.

Another aspect of the present invention is a method to remove and reassembly a conveyor belt at a processing unit, preferably a food processing unit with the inventive belt-transportation-trolley, wherein:
- a first and a second end of the conveyor belt are disconnected,
- the conveyor belt is moved into a receptacle or coiled up on means of the belt-transportation-trolley,
- the conveyor belt is removed from the receptacle or the coiling means and reassembled at the food processing unit and
- the first and the second end of the conveyor belt are connected again.

The disclosure made regarding this subject matter also applies to the other subject matters and vice versa.

This subject matter of the present invention relates to a method to remove a conveyor belt from a food processing unit, so that, for example, the food processing unit and/or the conveyor belt can be cleaned. Subsequently, the conveyor belt is reassembled at the food processing unit.

In a first step, two ends of the conveyor belt are disconnected and then the conveyor belt is moved manually, by motor means and/or by gravity in or into the receptacle or coiled up by corresponding coiling means. For reassembly or prior to reassembly, the conveyor belt is removed from the receptacle or rolled off and reassembled at the food processing unit.

Preferably, the conveyor belt is lifted out of the receptacle prior to its reassembly at the food processing unit. This lifting is preferably carried out by coiling the conveyor belt around a means which is located above the receptacle.

Preferably, the belt is turned around a vertical axis by 180° prior to its reassembly at the food processing unit.

Alternatively the conveyor belt is lowered into the receptacle by roll off means prior to its reassembly at the food processing unit.

Preferably, the conveyor belt is cleaned during lifting and/or lowering. The cleaning can be carried out with nozzles, brushes, a cloth or the like. Preferably a cleaning agent like water or a water based liquid are used. However other cleaning agents are also feasible. Preferably, the conveyor belt is dried after its cleaning. The conveyor belt can be disinfected prior to its reassembly.

Due the present inventions, both machine and front and back of belt can be cleaned thoroughly. The system enables repositioning of the belt into the machine under same conditions as the removal conditions.

The inventions are now explained according to Figures 1 - 7. These explanations do not limit the scope of protection of the present invention and apply to all inventions of the present application likewise.
- Fig. 1a: shows a food processing unit, here a marination device.
- Fig. 1b: shows a system comprising the food processing device and the belt-transportation-trolley.
- Fig. 1c: shows the conveyor belt of the food processing unit.
- Fig. 2: shows a first embodiment of the removal of the conveyor belt.
- Fig. 3: shows a second embodiment of the removal of the conveyor belt.
- Fig. 4: shows a third non claimed embodiment of the removal of the conveyor belt.
- Fig. 5: shows the coiling of the conveyor belt.
- Fig.6: shows the preparation of the reassembly of the conveyor belt.
- Fig. 7: shows one embodiment of the positioning/reassembling of the conveyor belt in the food processing unit.

All examples refer to a food processing unit. However, the present invention is not restricted to food processing units, but can be utilized in combination with each processing unit, particularly production units which must meet a high hygienic standard.

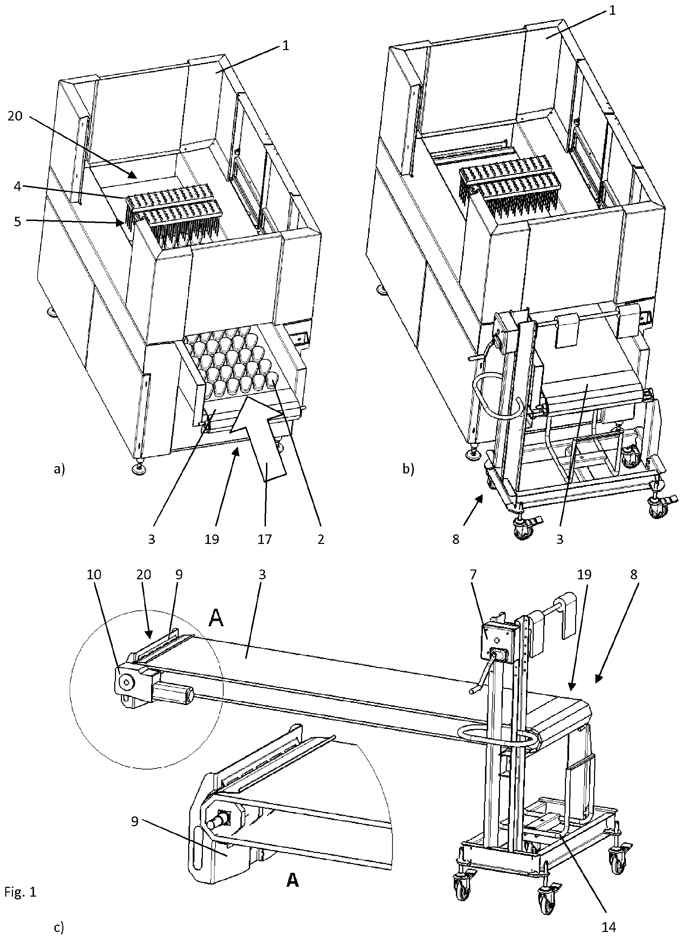

Figure 1a) shows a food processing unit, here a marination device, particularly an injector 1. An injector is a device for introducing a liquid, such as brine, into a food product 2, such as meat, ham and the like, comprising a conveyor belt 3, which is connected at its front ends so that an endless belt is provided and on which the product 2 can be arranged, a needle head 4 at some distance from the conveyor belt 3, the needle head 4 bearing a multiplicity of hollow needles 5 oriented transversely with respect to the conveyor belt 3 and which needle head 4 and its needles 5 will move to and fro the belt for inserting the needles 5 into the food product 2 and therewith supplying a liquid into the food product 2. The food product 2 positioned on conveyor belt 3, which is driven by a motor 10, are moving during production from infeed side 19 to outfeed side 20 in production direction shown by arrow 17. However, the food product preferably stands still during the contact with the needles.

For hygienic reasons the food processing unit 1 has to be cleaned frequently. To enable complete cleaning, accessibility and inspection of the machine and conveyor belt 3, the conveyor belt is removed from the machine 1 and stored in a belt-transportation-trolley 8, as can be seen from figures 1b and 1c. This belt-transportation-trolley 8 comprises a receptacle 14 and and/or is provided with means 7 to coil up the conveyor belt, here a hoisting device 7, which is placed above the receptacle 14. The actual removal or repositioning of the conveyor belt 3 is preferably supported by a belt drive motor 10 which is used to rotate the endless belt 3 during production and can be activated with, for example, a jog-function push button. Other drive means or other ways to move the belt in the direction of belt-transportation-trolley 8, for example manually, is also possible.

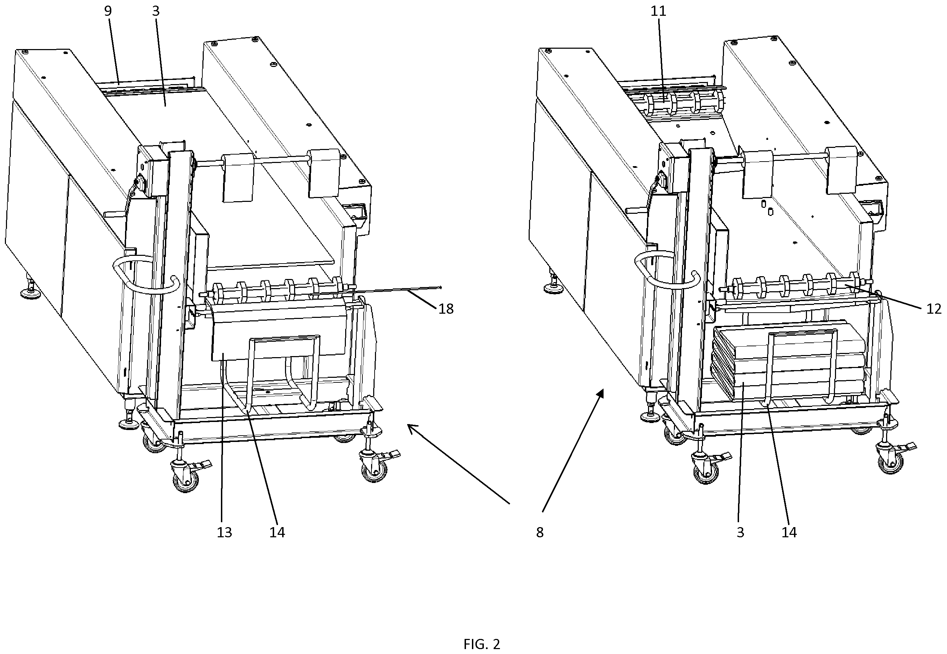

Reference is now made to Figures 1c and 2. During production on the food processing unit 1, the conveyor belt 3, here an endless plastic belt 3, rotates around a drive shaft 11 and an idle shaft 12. The drive shaft 11, which is driven by a motor, comprises here sprockets at its circumference. The idle shaft 12 is preferably also provided with sprockets. To drive the conveyor belt, the sprockets of the drive shaft will hook into form-fit-means in and/or at, preferably the backside of, the conveyor belt. The described invention in this patent application is not limited to this drive means and/or this conveyor belt design. Other combinations of belts and drive means can be, for example, pre-shaped shafts which are in direct contact with the conveyor belt, wire belt, steel belt, and belt driven by friction, etc.
A belt guide module 9 can be used to remove the conveyor belt from the food processing unit. This module 9 is preferably placed at the drive shaft side and around the drive shaft 11 to secure a form-, force- and/or friction-connection between the conveyor belt and belt drive, in the present case, the sprockets on the drive shaft. Other means to secure this connection are also feasible.

As shown in figure 2 the belt-transportation-trolley 8 will be placed here at the idle shaft side. By removing connection means 18 between two opposite ends of the conveyor belt 3, the front end of the lower part 13 of this conveyor belt can be led towards the receptacle 14 of the belt-transportation-trolley 8. The receptacle is placed below the transportation plane of the conveyor belt 3. By preferably activating the jog-function of the drive motor in a forward direction, opposite to arrow 17, the conveyor belt 3 runs driven by the drive shaft 11 into the receptacle 14 of the belt-transportation-trolley 8. Mainly depending on the position of the drive shaft, the design of the machine and/or the weight of the belt, the last part of the conveyor belt slides via gravity in this receptacle. Preferably, the conveyor belt is folded in the receptacle.

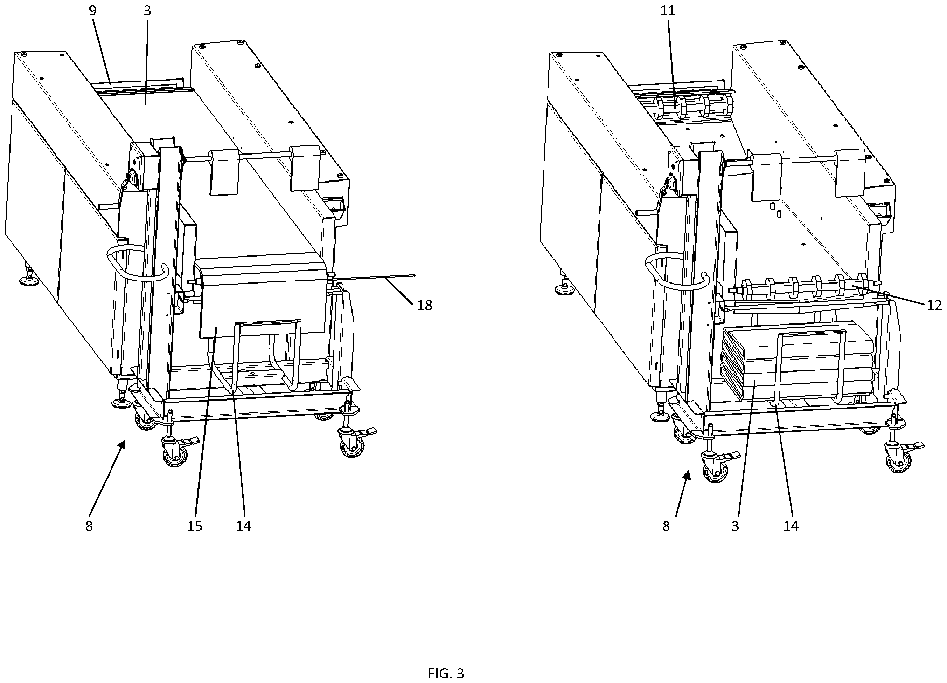

Referring now to figure 3, a second preferred embodiment of the present invention is depicted. After removing the connection means 18 of conveyor belt 3, the upper part 15 of this conveyor belt can be led towards the receptacle 14 of the belt-transportation-trolley 8. By preferably activating the jog-function of the drive motor, in a backwards direction, the conveyor belt runs driven by the drive shaft into the receptacle 14 of the belt-transportation-trolley 8. Mainly depending on the position of the drive shaft, the design of the machine and the weight of the belt, the last part of the belt slides via gravity in this receptacle. Preferably, the conveyor belt is folded in the receptacle.

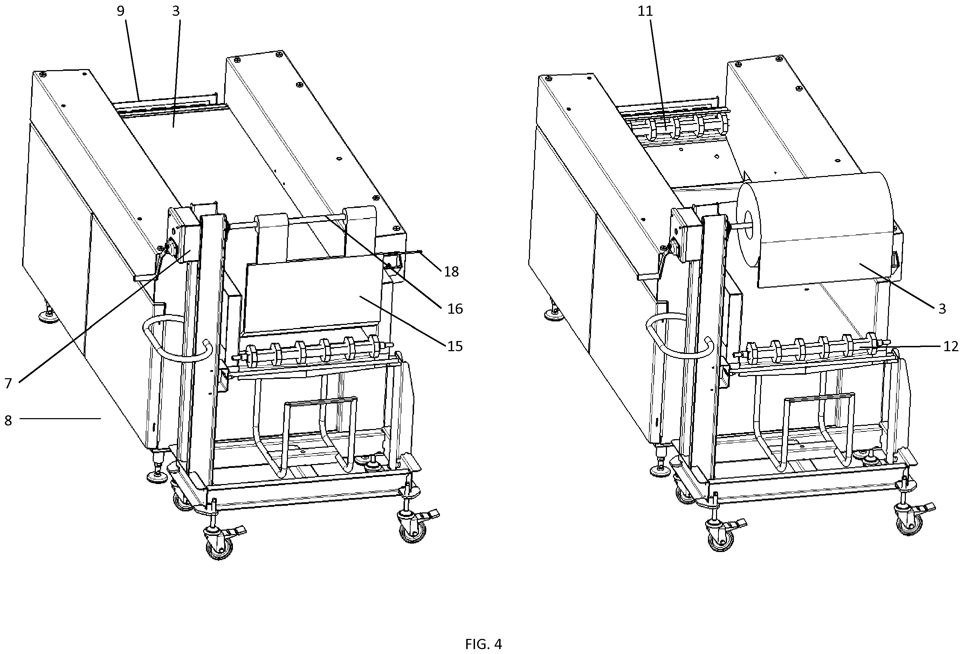

Figure 4 depicts a third non claimed embodiment of the present invention. After removing the connection means 18 of conveyor belt 3, the upper part 15 of this belt can be connected for example with the connection means 18 to the coil up means 7 the belt transportation trolley, here a hoisting device 7 which comprises a hoisting device shaft 16. This shaft is placed above the transportation plane of the conveyor belt. This shaft can be driven by electric drive means but preferably a manual drive will be used as shown in this Figure. By activating the jog-function of the drive motor and/or activating the means 16, the entire belt can be coiled up onto, for example, the hoisting device shaft 16 of the belt-transportation-trolley 8. For cleaning purposes, the conveyor belt can be lowered into the receptacle 14. During this movement of the conveyor belt, preferably the cleaning takes place. Preferably, the conveyor belt is folded in the receptacle.

A fourth non claimed embodiment, which is not depicted, is similar to the embodiment shown in Figure 4. However, the lower part 13 of the conveyor belt 3 is connected to the coil up means 7 and then the conveyor belt is coiled up.

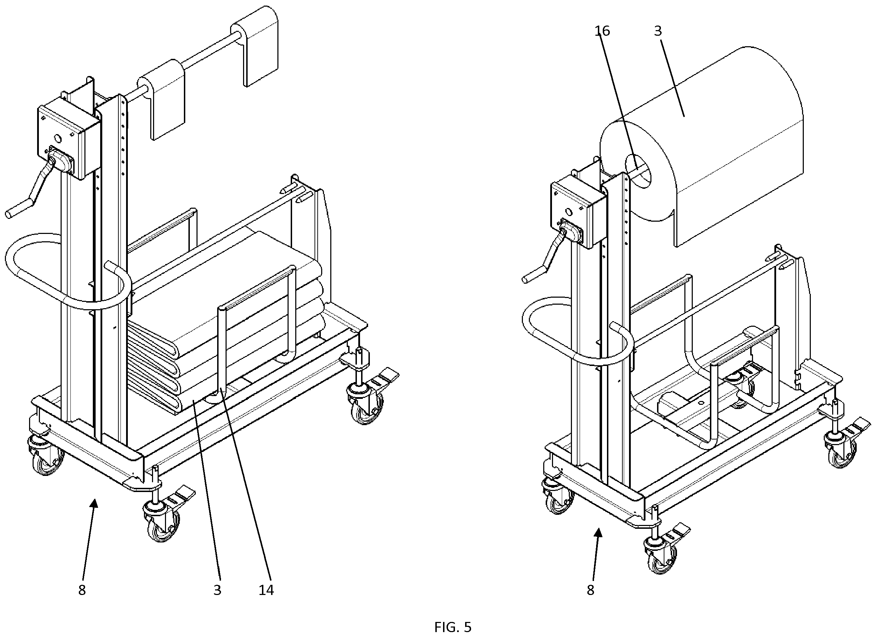

Reference is now made to Figure 5. Each of the above mentioned belt removing procedures results in a machine which is well accessible for cleaning. The conveyor belt is either rolled up or placed into the receptacle 14. The means 7, 16 can be used for lowering and/or lifting the conveyor belt. Because of the mobility of the belt transportation trolley, cleaning can be done remote from the food processing unit.

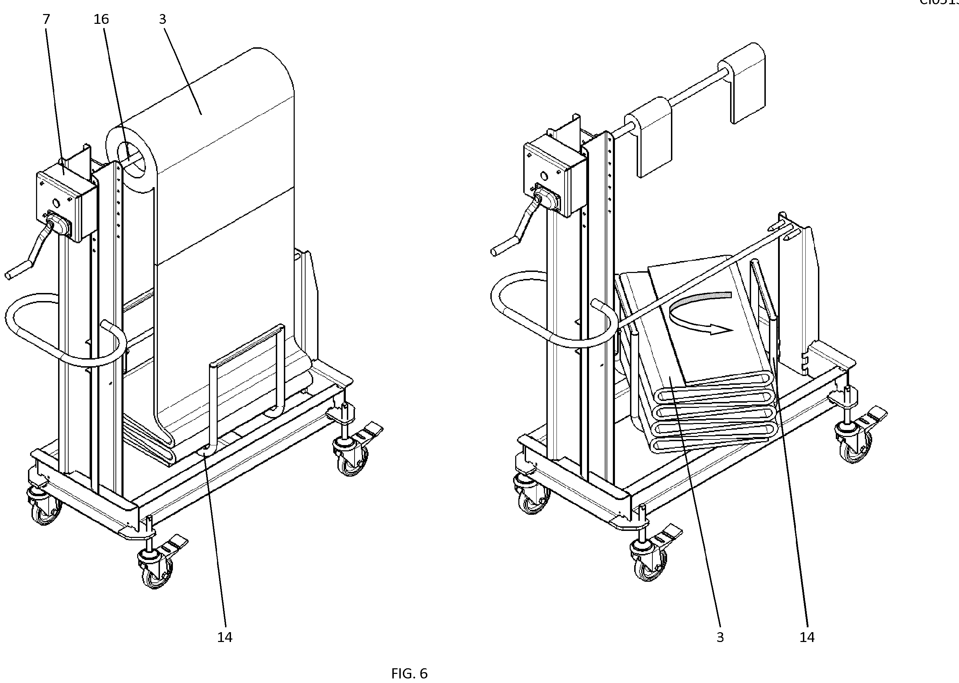

As shown in Figure 6, by means of the hoisting device 7, the conveyor belt 3 can be lifted from receptacle 14 to the higher positioned hoisting device shaft 16 and vice versa, which enables an optimization of a step-by-step, front and back cleaning procedure of the entire conveyor belt. The conveyor belt itself has a production and a non production side. After cleaning the belt, it has to be repositioned in the machine with its right side up. Removing the conveyor belt, the way as described according to Fig. 3 results in a position of the belt with its wrong side up for repositioning into the machine. To avoid this mishap, the receptacle 14 including the belt 3 can be turned 180° around a vertical axis which enables a correct reposition of the belt.

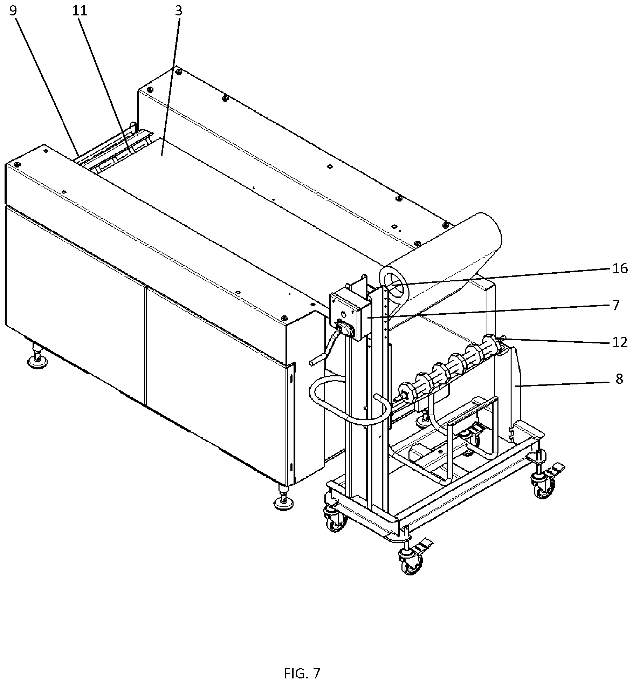

As shown in Figure 7, for repositioning of the conveyor belt 3 back into the machine, the belt-transportation-trolley with an entirely coiled up conveyor belt on the hoisting device shaft 16 will be positioned at the idle shaft 12 side of the food processing unit. Preferably belt guide module 9 will be used to secure a connection between the belt and the belt drive, in this embodiment the sprockets on drive shaft 11. Other means to secure this connection are possible too.

The belt can be uncoiled/rolled off from the belt-transportation-trolley by using the hoisting device 7 and by pushing the belt manually towards the eventually used guide module and the belt drive. When the belt is sufficiently connected with the belt drive, in this embodiment the sprockets on drive shaft 11, the jog-function of the drive motor pulls the entire belt back into its original position. After the entire conveyor belt 3 is removed from the cleaning device, both ends of the belt can be connected to each other with connection means 18, creating an endless conveyor belt ready for production.

Besides the procedure described above, the belt can also be handled / positioned manually on the machine without use of any drive means. For this, the drive shaft, which is directly connected with the drive motor, has to be provided with a freewheel arrangement in order to rotate the drive shaft manually.
Other ways to move the belt and/or position the belt in the machine are also possible.
In above described embodiments, conveyor belt 3 will be removed from / placed on the machine at the side were the idle shaft 12 is positioned, which is at the infeed side 19 of the food processing unit. In another, not shown embodiment, the idle shaft 12, and thus the position were the conveyor belt will be removed / placed, will be the outfeed side 20 of the food processing unit and the drive shaft 11 will then be positioned at the infeed side 19 of the food processing unit.

In all described embodiments, the belt transportation trolley can also be positioned next to the end of the processing unit where the drive shaft 11 is located and the conveyor belt will be assembled and disassembled from this end.

This invention is described by means of an injector but is not limited thereto and can also be used in combination with another food processing unit and/or another processing unit in general.

### List of reference signs:

- 1: injector / machine, processing unit, food processing unit
- 2: product, food product
- 3: conveyor belt
- 4: needle head
- 5: needles
- 6: system
- 7: means to store the conveyor belt, means to coil up the conveyor belt, hoisting device
- 8: Belt-transportation-trolley
- 9: belt guide module
- 10: belt drive motor
- 11: drive shaft
- 12: idle shaft
- 13: lower end of conveyor belt 3
- 14: means to store the conveyor belt, receptacle
- 15: upper end of conveyor belt 3
- 16: axel, hoisting device
- 17: arrow showing production direction
- 18: connection means
- 19: infeed side
- 20: outfeed side

## Claims

1. Belt-transportation-trolley (8) comprising means (7, 14) to store the conveyor belt (3), **characterized in, that** the means (14) is a receptacle (14) for a conveyor belt, into which the conveyor belt is folded.

2. Belt-transportation-trolley (8) according to claim 1 , **characterized in, that** a means (7) to coil up the conveyor belt is placed above the receptacle (14).

3. Belt-transportation-trolley (8) according to claim 2, **characterized in, that** the distance between means (7) to coil up the conveyor belt and the receptacle (14) is sufficient to clean the conveyor belt, preferably on two opposite sides.

4. Belt-transportation-trolley (8) according to claims 1 - 3, **characterized in, that** the receptacle is rotatable around a vertical axis.

5. Belt-transportation-trolley (8) according to one the preceding claims, **characterized in, that** the means (7) to coil up the conveyor belt is a hoisting device or an axle.

6. System (6) comprising a food processing unit (1) with a conveyor belt (3) and a belt-transportation-trolley according to one of the preceding claims.

7. Method to remove and reassemble a conveyor belt (3) at a food processing unit (1) with a belt-transportation-trolley according to one of the preceding claims wherein:
- a first and a second end of the conveyor belt are disconnected,
- the conveyor belt is moved into a receptacle (14),
- the conveyor belt is removed from the receptacle (14) and reassembled at the food processing unit and
- the first- and the second end of the conveyor belt will be connected again.

8. Method according to claim7, **characterized in, that** during removal the conveyor belt (3) is placed into the receptacle (14) and for reassembly, preferably rolled off from the means (7) to coil up and vice versa.

9. Method according to claim 8, **characterized in, that** the conveyor belt is lifted out of the receptacle by the means (7) to coil up prior to its reassembly at the food processing unit (1).

10. Method according to claim 9, **characterized in, that**, during removal, the conveyor belt (3) will be positioned on the means (7) to coil up and for reassembly preferably rolled off from the means (7) to coil up.

11. Method according to claim 8 or 10, **characterized in, that** the conveyor belt is lowered into the receptacle by the means (7) to coil up prior to its reassembly at the food processing unit (1).

12. Method according to claim 9 or 11, **characterized in, that** the conveyor belt is coiled up during its lifting and rolled off during lowering.

13. Method according to claims 7 or 12, **characterized in, that** the conveyor belt is turned around a vertical axis by 180° prior to its reassembly.

14. Method according to claims 8 - 13, **characterized in, that** the conveyor belt is cleaned during the transfer from means (7) to coil up to the receptacle (14) and vice versa and is preferably dried after its cleaning.

## Patentansprüche

1. Bandtransporttrolley (8), umfassend ein Mittel (7, 14) zum Lagern eines Förderbands (3), **dadurch gekennzeichnet, dass** das Mittel (14) eine Aufnahme (14) für ein Förderband ist, in die das Förderband hineingefaltet wird.

2. Bandtransporttrolley (8) nach Anspruch 1, **dadurch gekennzeichnet, dass** ein Mittel (7) zum Aufrollen des Förderbands über der Aufnahme (14) angeordnet ist.

3. Bandtransporttrolley (8) nach Anspruch 2, **dadurch gekennzeichnet, dass** der Abstand zwischen dem Mittel (7) zum Aufrollen des Förderbands und der Aufnahme (14) ausreicht, um das Förderband zu reinigen, bevorzugt auf zwei gegenüberliegenden Seiten.

4. Bandtransporttrolley (8) nach Anspruch 1-3, **dadurch gekennzeichnet, dass** die Aufnahme um eine Vertikalachse rotierbar ist.

5. Bandtransporttrolley (8) nach einem der vorstehenden Ansprüche, **dadurch gekennzeichnet, dass** das Mittel (7) zum Aufrollen des Förderbands eine Hebevorrichtung oder eine Achse ist.

6. System (6), eine Lebensmittelverarbeitungseinheit (1) mit einem Förderband (3) und einem Bandtransporttrolley (8) nach einem der vorstehenden Ansprüche umfassend.

7. Verfahren zum Ausbauen und Wiedereinbauen eines Förderbands (3) an einer Lebensmittelverarbeitungseinheit (1) mit einem Bandtransporttrolley nach einem der vorstehenden Ansprüche, wobei:
- ein erstes und ein zweites Ende des Förderbands entkoppelt werden,
- das Förderband in eine Aufnahme (14) bewegt wird,
- das Förderband aus der Aufnahme (14) entnommen und an der Lebensmittelverarbeitungseinheit wieder eingebaut wird, und
- das erste und das zweite Ende des Förderbands wieder gekoppelt werden.

8. Verfahren nach Anspruch 7, **dadurch gekennzeichnet, dass** das Förderband (3) während des Ausbaus in der Aufnahme (14) angeordnet wird und beim Wiedereinbau bevorzugt von dem Mittel (7) zum Aufwickeln abgewickelt wird und umgekehrt.

9. Verfahren nach Anspruch 8, **dadurch gekennzeichnet, dass** das Förderband von dem Mittel (7) zum Aufrollen vor dem Wiedereinbau an der Lebensmittelverarbeitungseinheit (1) aus der Aufnahme gehoben wird.

10. Verfahren nach Anspruch 9, **dadurch gekennzeichnet, dass** das Förderband (3) während des Ausbaus auf dem Mittel (7) zum Aufrollen angeordnet wird und zum Wiedereinbau bevorzugt von dem Mittel (7) zum Aufrollen abgerollt wird.

11. Verfahren nach Anspruch 8 oder 10, **dadurch gekennzeichnet, dass** das Förderband vor dem Wiedereinbau an der Lebensmittelverarbeitungseinheit (1) von dem Mittel (7) zum Aufrollen in die Aufnahme abgesenkt wird.

12. Verfahren nach Anspruch 9 oder 11, **dadurch gekennzeichnet, dass** das Förderband während des Hebens aufgerollt wird und während des Absenkens abgerollt wird.

13. Verfahren nach Anspruch 7 oder 12, **dadurch gekennzeichnet, dass** das Förderband vor dem Wiedereinbau um 180° um eine Vertikalachse gedreht wird.

14. Verfahren nach Anspruch 8-13, **dadurch gekennzeichnet, dass** das Förderband während des Transfers von dem Mittel (7) zum Aufrollen zu der Aufnahme (14) und umgekehrt gereinigt wird und bevorzugt nach dem Reinigen getrocknet wird.

## Revendications

1. Chariot de transport à courroie (8) comprenant des moyens (7, 14) pour stocker la courroie de transport (3), **caractérisé en ce que** le moyen (14) est un réceptacle (14) pour une courroie de transport, dans lequel la courroie de transport est pliée.

2. Chariot de transport à courroie (8) selon la revendication 1, **caractérisé en ce qu'**un moyen (7) pour bobiner la courroie de transport est placé au-dessus du réceptacle (14) .

3. Chariot de transport à courroie (8) selon la revendication 2, **caractérisé en ce que** la distance entre le moyen (7) pour bobiner la courroie de transport et le moyen (14) est suffisante pour nettoyer la courroie de transport, de préférence sur deux côtés opposés.

4. Chariot de transport à courroie (8) selon les revendications 1 à 3, **caractérisé en ce que** le réceptacle est rotatif autour d'un axe vertical.

5. Chariot de transport à courroie (8) selon l'une des revendications précédentes, **caractérisé en ce que** le moyen (7) pour bobiner la courroie de transport est un dispositif de hissage ou un essieu.

6. Système (6) comprenant une unité de traitement d'aliments (1) équipée d'une courroie de transport (3) et d'un chariot selon l'une des revendications précédentes.

7. Procédé pour enlever et réassembler une courroie de transport (3) dans une unité de traitement d'aliments (1) équipé d'un chariot de transport à courroie selon l'une des revendications précédentes, dans lequel:
- une première et une seconde extrémités de la courroie de transport sont déconnectées,
- la courroie de transport est déplacée dans un réceptacle (14),
- la courroie de transport est enlevée du réceptacle (14) et est réassemblée dans l'unité de traitement d'aliments, et
- les première et seconde extrémités de la courroie de transport sont connectées à nouveau.

8. Procédé selon la revendication 7, **caractérisé en ce que**, lors de l'enlèvement, la courroie de transport (3) est placée dans le réceptacle (14) et, lors du réassemblage, elle est de préférence déroulée à partir du moyen de bobinage (7), et vice versa.

9. Procédé selon la revendication 8, **caractérisé en ce que** la courroie de transport est soulevée hors du réceptacle par le moyen de bobinage (7) avant son réassemblage dans l'unité de traitement d'aliments (1).

10. Procédé selon la revendication 9, **caractérisé en ce que**, lors de l'enlèvement, la courroie de transport (3) sera positionnée sur le moyen de bobinage (7) et, pour le réassemblage, elle sera de préférence déroulée à partir du moyen de bobinage (7).

11. Procédé selon la revendication 8 ou 10, **caractérisé en ce que** la courroie de transport est abaissée dans le réceptacle par le moyen de bobinage (7) avant son réassemblage dans l'unité de traitement d'aliments (1).

12. Procédé selon la revendication 9 ou 11, **caractérisé en ce que** la courroie de transport est bobinée lorsqu'elle qu'elle est hissée, et est déroulée lorsqu'elle est abaissée.

13. Procédé selon la revendication 7 ou 12, **caractérisé en ce que** la courroie de transport est tournée à 180° autour d'un axe vertical avant son réassemblage.

14. Procédé selon les revendications 8 à 13, **caractérisé en ce que** la courroie de transport est nettoyée pendant le transfert à partir du moyen de bobinage (7) jusqu'au réceptacle (14), et vice versa, et est de préférence séchée après son nettoyage.
